# EUROPEAN PATENT SPECIFICATION

(11) **EP 1 724 054 B1**
(45) Date of publication and mention of the grant of the patent: **19.11.2008**
(21) Application number: 05425337.2
(22) Date of filing: 18.05.2005
(51) Int. Cl.: B23Q 1/58, B23Q 11/00

(54) **Counterbalance moving device for a machine tool**
Ausgleichmechanismus für Werkzeugmaschine
Mécanisme d'équilibrage pour machine outil

(43) Date of publication of application: 22.11.2006
(73) Proprietor: Sartorio, Franco, 10129 Torino (IT)
(72) Inventor: Sartorio, Franco, 10129 Torino (IT); Balbi, Mario, 12025 Dronero (CN) (IT)
(74) Representative: Cian, Paolo

(56) References cited:
- EP-A- 1 312 441
- US-A1- 2004 025 761
- PATENT ABSTRACTS OF JAPAN vol. 013, no. 485 (M-887), 6 November 1989 (1989-11-06) -& JP 01 193134 A (KOMATSU LTD), 3 August 1989 (1989-08-03)

## Description

The present invention refers to a working unit, particularly of the type intended to be used in a numerically controlled machine tool.

More specifically, the invention relates to a working unit according to the preamble of appended claim 1.

A working unit of the type defined above is known from WO-A-02/02281 in the name of the same Applicant. This working unit can be used independently or in the context of any numerically controlled machine, for carrying out, by means of a tool, light precision workings with high acceleration such as, for example, high speed finishing millings, engravings and markings, as well as workings without contact such as laser marking, cut and welding. Since this working unit is intended to carry out precision workings, the forces applied by the tool to the workpiece to be worked must be constantly held under control, by dosing the advance acceleration of the tool in such a manner that any deformation of the tool and/or of the machine tool structure do not exceed the preset precision tolerances.

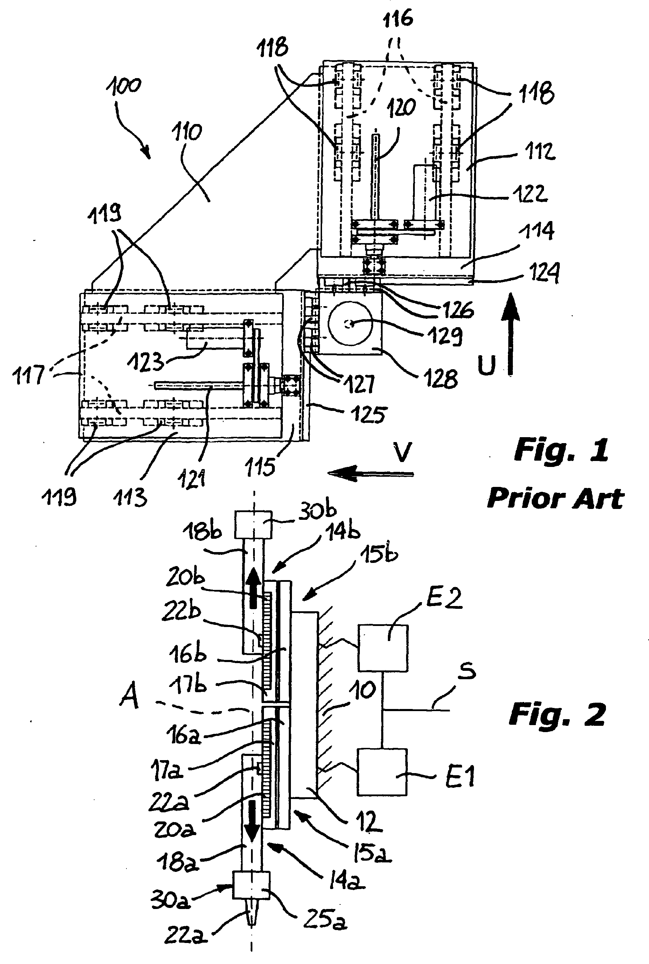

The known working unit is shown in appended figure 1, where it is indicated 100 as a whole. It comprises a frame 110 to which two base structures 112 and 113 are rigidly connected, respectively directed according to a pair of orthogonal axes U and V, which identify two branches of the unit 100. Respective movable plate shaped members, indicated 114 and 115, are associated to the base structures 112 and 113, which are mounted vertically offset and are slidable by means of linear guides 116, 117 coupled with sliding shoes 118, 119, respectively of the base structure 112 and the movable member 114, and of the base structure 113 and the movable member 115. The movement of each movable member 114, 115 with respect to the respective base structure 112, 114, is controlled by means of a respective numerically controlled linear actuator 120, 121, driven by a respective motor 122, 123. Each movable member 114, 115 is provided with a sliding guide 124, 125 extending in a direction perpendicular to the sliding of the respective movable member, which sliding guide is engaged by shoes 126, 127 fixed on orthogonal sides of a generally square shaped platform 128 supporting a working tool 129 such as a laser head.

The movement of the movable members 114 and 115 in the respective sliding directions, resulting from driving the actuators 120 and 121 by means of respective control signals, causes the platform 128 to move with respect to the frame 110 in a plane working area defined by the axes U and V, whose extension is relatively small. The tool 129 can be further moved along a third linear direction Z, orthogonal to the directions of the axes U and V.

This known working unit, equipped with linear motors, has a structure of the so-called P.K.M. (Parallel Kinematic Machine) type, which has the advantage of having characteristics of high lightness and which is therefore able to reach accelerations much higher than those of the conventional working units of other kinds. If the elements of this unit are not adequately balanced, the accelerations applied to them can generate real impacts and cause vibrations and oscillations which are transmitted to the various parts of the working unit and to the possible machine to which it is associated, considerably reducing the precision of the working operations to be carried out by means of the tool of the working unit.

This working unit may equip several kinds of machine tools, provided with a table or working plane to which a workpiece to be worked is associated. Such machine tools may include handling devices adapted to move the working unit and/or the workpiece to be worked along linear axes X, Y, and possibly Z, orthogonal to each other, the axes X and Y lying on the same plane or on planes parallel to that defined by the axes U, V of the working unit, in order to cause a preset relative movement between the working unit and the workpiece to be worked. In particular, these handling devices are adapted to cause a relative movement of the working unit with respect to the workpiece to be worked, in a working area the extension of which is wide with respect to that of the working area in which the movements of the tool 129 take place by means of the working unit 100.

The movements of the tool 129 resulting from the combination of both the movements applied to it by the working unit, which take place with high accelerations in a small space, and the movements carried out by the working unit 100 along the axes X, Y and possibly Z, which take place with relatively small accelerations in a wider space, must allow the tool to reach all zones of the workpiece to be worked and are coordinated to each other in order to allow the tool to follow a continuous path on the workpiece, which is preset by the working program, taking account of the set geometric and kinematic precisions.

A working unit of the type defined above is also known from the content of the abstract of JP-01-193 134, which discloses a system for balancing the movement of a slide table adapted to support a piece to be worked. The weight of the slide table with the piece to be worked is initially input to the system, as well as the weight of the counter-weight. Thus, a command signal is issued in order to move the slide table and a moving quantity for the counter weight is computed according to the signal, in order to move the counter-weight. The centers of gravity of the slide table with the relevant piece to be worked and of the counter balance move along parallel axes spaced to each other, so that their opposite movements originate a moment (that is a couple) which is not balanced by the system of this document.

The known machine tools, including those equipped with the known working unit described above, are usually very noisy because their movable members, which undergo linear, rotary, oscillating, etc., movements are not balanced and therefore transmit forces and moments which can cause strong oscillations and vibrations.

The absence of balancing, or of an adequate balancing, involves also a reduction of the performances of the machine since, owing to vibrations and oscillations generated during operation, the working precision requirements cannot be kept in all the theoretical operating field of such machines.

In the attempt to avoid these drawbacks, several measures can be taken. For example, fixed structures (such as anchorages, foundations, etc.) are usually employed in order to oppose high forces or moments or strong vibrations, which are arranged outside the equipment provided with the movable members, with the aim of preventing undesired movements of the equipment, or stationary acoustic insulating screens may be used in order to oppose the arising of noises caused by vibrations. It is also possible to increase the rigidity of the fixed and movable members of the equipment and the respective connections, as well as to lighten the movable masses. In some cases, a partial dynamic balancing of the rotary or oscillating members may be obtained by fixing to them additional masses in appropriate positions, or by employing complementary balancing devices whose movement is synchronized with that of the elements to be balanced. For example, in internal combustion engines, sometimes auxiliary counter-rotating shaft are used in order to obtain the balancing of the main shafts, which are connected, and therefore mechanically synchronized, with the main shafts.

However, in the case of the working unit described above, in view of the very high accelerations which may be reached by it, conventional balancing systems have proven to be quite unsatisfactory. In fact, such a working unit must satisfy several requirements, some of which are extremely severe, with reference to configuration and to kinematic, dynamic and path precision performances, which are synthesizes in the following:
- a): the movable member to be balanced is only one;
- b): the movements are linear;
- c): the length of the movements is usually in the order of 100 mm, and very rarely exceeds 500 mm;
- d): the overall mass of the movable member is usually in the order of 10 kg, but it can reach 50 kg;
- e): the accelerations given to the movable member may exceed 100 m/s²;
- f): the position control during the movement is very accurate, and usually tracking accuracies of the theoretical path smaller than 10 µm are required.

Since requirements d), e), f) are particularly severe, the conventional balancing systems aiming at solving the balancing problems with the classical means of the Mechanics alone, which employ counter-masses to be moved in a synchronized way along a direction opposite to that of the masses to be balanced, by using kinematic linkages with mechanical connections such as connecting rods and cranks or pinions and racks, turn out to be inadequate for such a working unit in view of the very high accelerations applied to the movable member, which can generate very violent impacts. In fact, the more the speed of the members in motion is high, more is difficult to keep the precision of the synchronization. It is therefore necessary to resort to a more "extreme" balancing, that is to a total dynamic balancing. Moreover, in the case of conventional balancing devices, their dimensioning, taking into account the fact that the control system of the movement of the balancing members must assure at least two years life with a high reliability, working continuously at least on two shifts, would require rooms and masses which cannot be accepted for the applications which the working unit is intended to.

In order overcome the drawbacks of the prior art, the subject of the invention is a working unit having the features indicated in appended claim 1.

By virtue of this idea of solution, the working unit of the invention turns out to be perfectly dynamically balanced, the forces and moments of its movable members being compensated by the respective balancing means, so that no oscillation and/or vibration is transmitted either to the elements of the working unit and to the possible machine tool equipped by such a unit, to full advantage of the attainment of an extremely high working precision and of the substantial elimination of vibrations and noises during operation.

The present invention is based substantially on the following considerations.

In order to attain a total dynamic balancing, it is necessary that a law of Dynamics is satisfied, according to which: "A fully insulated dynamic system is balanced when all resultants of the forces and moments are null, at each moment and for whichever movement of its inner mechanisms."

In practice, if "a totally balanced" dynamic system, that is "dynamically balanced", is hung to a completely elastic element, such as a very elastic spring, with whichever orientation, in order to allow it any degree of freedom, it remains stationary for any movement of its inner mechanisms, even if these movements are very strong.

In a such system, being Ma the sum of masses of the movable members to be balanced, and being Mb the sum of masses of the balancing member, which corresponds to the counter-mass, the total dynamic balancing can be attained if:
1) the counter-mass is exactly equal to the mass to be balanced (Mb = Ma),
2) the resultant of forces and moments is null in each moment, and
3) the position of the center of gravity of all movable masses to be balanced exactly corresponds in each moment to the position of the center of gravity of the counter-mass.

In order to attain this result, each movable member to be balanced and the respective counter-weight must be complementary to each other and connected in a nonmechanical manner, therefore in an electronic manner, since any mechanical connection would unavoidably introduce inaccuracies, their mutual position must be determined on the basis of the instantaneous position of the movable member to be balanced, and the movement of the respective counter-weight must be perfectly synchronized with that of the movable member to be balanced.

A working unit of the type mentioned above, which must satisfy in particular the requirements mentioned above at items a) to f), in a practical case is similar to a box having an overall mass of about 20 kg and containing a movable mass of 10 kg which can undergo accelerations of 100 m/s² and develop an instantaneous thrust of 1000 N, equivalent to about 100 kg, which corresponds to the impact of an hammer, so that the box, if not adequately anchored, may start as a projectile. The working unit of the invention, with the respective balancing system, is completely vibration free, so that the balanced box remains stationary for any acceleration applied to its movable members.

Moreover, the invention relates to machine tools which can be equipped with the working unit of the invention.

Further characteristics and advantages of the invention will become more clearly evident from reading the following detailed description, which has been given purely by way of a non limiting example and is referred to the attached drawings, in which:
- figure 1 is a top elevational view of a working unit according to the prior art, whose structure has been previously described,
- figure 2 is a schematic side elevational view of a first embodiment of a working unit according to the invention, which can be moved along a single axis,
- figures 3 and 4 are a schematic front elevational view and a schematic top elevational view from arrow IV of figure 3, respectively, of a second embodiment of a working unit according to the invention, which can be moved along a single axis,
- figures 5 and 6 are a sectional front elevational view and a sectional top elevational view, respectively, which show a constructive realization of the working unit of figures 3 and 4, figure 5 being sectioned along line V-V of figure 6 and figure 6 being sectioned along line VI-VI of figure 5,
- figures 7 and 8 are two top elevational views of a working unit according to the invention, which supports a working head which can be moved according two directions perpendicular to each other, in two different operational configurations,
- figure 9 is a perspective schematic view of a machine tool equipped with the working unit of the invention,
- figure 10 is a perspective schematic view of another machine tool equipped with the working unit of the invention, and
- figures 11a to 11e are perspective schematic views of other possible configurations of machine tools to which the working unit of the invention can be applied.

With initial reference to a first embodiment shown in figure 2, a working unit 1 comprises a base structure 12 fixed to a frame 10. The base structure 12 supports a movable member 14a and a counter-weight unit 14b, both of which are slidably mounted along a direction defined by axis A of figure 1 and are arranged in a substantially symmetrical and specular manner, which include respective first actuator means 15a and second actuator means 15b, each typically comprising a numerically controlled linear motor.

In particular, the first actuator means 15a consist of a stator 16a and of a slider 17a which is movable along the respective path defined by axis A. A first sliding element 18a, which supports at one end a working element 30a including a working head 25a provided with a tool 22a, for example a focussing laser head, is fixed to the slider 17a. Conveniently, a position sensor of the encoder type, having a graduated scale 20a connected to the stator 16a and a reading head 22a, for example of the optical type, connected to the movable member 18a, is associated to the first actuator means 15a.

The second actuator means 15b, which preferably consist of a linear motor identical to that of the actuator means 15a, comprise a stator 16b and the respective slider 17b which is movable along the path defined by axis A. A second sliding element 18b, to one end of which a counter-weight element 30b is fastened, is fixed to the slider 17b. The mass of the movable parts of the counter-weight unit 14b, which comprises the masses of the slider 17b, of the first sliding element 18b and of the counter-weight element 30b, is equal to the mass of the movable parts of the movable member 14a, which comprises the masses of the slider 17a, of the sliding element 18a, of the head 25a and of the tool 22a. Conveniently, a position sensor of the encoder type, equal or similar to that associated to the first actuator means 15a, is associated to the second actuator means 15b, and comprises a graduated scale 20b connected to the stator 16b and a reading head 22b connected to the movable member 18b.

The movements of the movable member 14a and of the counter-weight unit 14b are controlled by the actuator means 15a and 15b through control signals coming from respective numerical control units E1 and E2 fed at the same time from a same signal S, in such a manner that the movements of the movable member 14a and of the counter-weight unit 14b are perfectly synchronized so that they have, in each moment, the same acceleration and consequently the same speed and the same position, each along the respective path.

Since in this embodiment the masses of the movable parts of the movable member 14a and of the counter-weight unit 14b, that is the masses of the sliders 17a and 17b and of the sliding elements 18a and 18b with the parts supported by them, are perfectly aligned in the axis A direction, and the movable member 14a and the counter-weight unit 14b have a specular symmetry, a perfect balancing both of the masses and of the moments is intrinsically accomplished, as well as the superimposition of the projections of the center of gravity of the masses of the movable member 14a and of the counter-weight unit 14b along axis A.

Although the configuration of this embodiment can be practically made, it has the disadvantage of being bulky in the direction of the movements identified by axis A.

A possible modification of the embodiment described above consists of a working unit (not shown in the figures) in which the movable member 14a is equal to that described above, while the mass of the counter-weight unit is splitted up in more counter-weight elements each of which is driven in a synchronized manner in the direction opposite to the movement of the movable member by means of a respective linear actuator of the same type of the actuator 15b. For example, two counter-weight units symmetrically arranged at opposite sides of the movable member, which is arranged in this case in a central position between the two counter-weight units, can be used, each of which has a mass equal to one half of the mass of the movable parts of the movable member. In this case, three numerical control units will be provided, fed at the same time by a same signal S and adapted to move the movable member in one direction and the two counter-weight units parallely in the opposite direction, in an independent but perfectly synchronized manner, in order to apply, in each moment, the same accelerations and consequently the same speed, and in order that the movable member and to the two counter-weight units assume the same position, along the respective path.

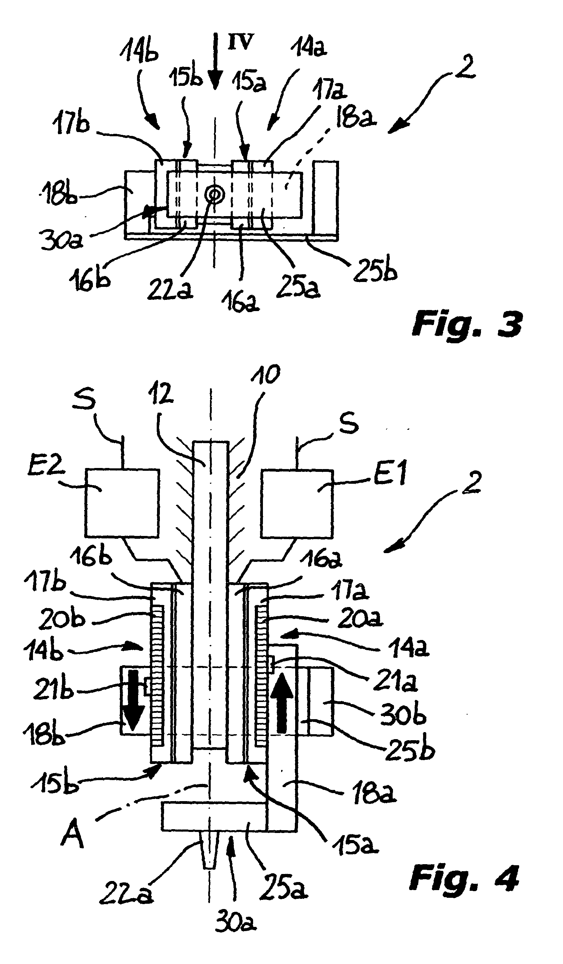

A second embodiment of the working unit of the invention is shown in figures 3 and 4, in which elements equal or similar to those of the previous embodiment have been indicated with the same references.

In the working unit of this embodiment, which is indicated 2, the movable member 14a and the counter-weight unit 14b are arranged at opposite sides of the base structure 12 fixed to the frame 10. The first actuator means 15a and the second actuator means 15b, each of which comprises a respective stator 16a, 16b and a respective slider 17a, 17b, which are arranged parallel to each other, are associated in a specular manner still at opposite sides of the base structure 12. The actuator means 15a and 15b are provided with respective position sensors, of the linear encoder type, and comprise respective reading scales 20a and 20b to which the respective reading heads 22a and 22b face.

A bracket portion 25a constituting a support platform of the tool 22a, extends cantilever from a free end of the first sliding element 18a of the movable member 14a, which is connected to the slider 17a.

An arm 25b, to the free end of which the counter-weight element 30b is anchored, in a position adjacent to the first sliding element 18a, is fixed to the second sliding element 18b of the counter-weight unit 14b, which is connected to the slider 17b.

Also in this case, the movements of the movable member 14a and of the counter-weight unit 14b are controlled by the actuator means 15a and 15b by means of respective control signals coming from the numerical control units E1 and E2, which are fed at the same time by a same signal S, so that the movements of the movable member 14a and of the counter-weight unit 14b, which take place along opposite directions, are perfectly synchronized and have, in each moment, the same acceleration, the same speed and the same position along the respective paths.

However, owing to the presence of the bracket portion 25a and to the fact that the first sliding element 18a is spaced from axis A along which the tool 22a moves, the movements of the movable member 14a generate a moment which has to be balanced in order to attain the dynamic balancing of the working unit 2. For this reason, the counter-weight element 30b, which moves fast with the sliding element 18b, is arranged at the side opposite to the sliding element 18b with respect to axis A, in such a manner that, owing to the presence of the arm 25b, it is able to generate a balancing moment equal and opposite to the moment generated by the movements of the movable member 14a.

Since in this case the centers of gravity of the the sliding elements 18a and 18b are not positioned symmetrically, differently from the previous embodiment, moments are generated which have to be balanced in order to attain the dynamic balancing of the movable member 14a by means of the counter-weight unit 14b. Moreover, taking into account that the structure of the working unit must be as rigid and light as possible, the balancing moment must be attained by means of a rigid and light arm, of such a length allowing to make use as much as possible of the available space, in order that a counter-weight element 30b as light as possible may be used.

In order to achieve the total dynamic balancing of the working unit 2, the overall mass of the counter-weight element 30b and of the movable elements of the counter-weight unit 14b fast to it, must be exactly equal to the mass of the movable parts of the movable member 14a, and the moments applied to the movable member 14a must be compensated, in each moment, by the moments generated by the counter-weight unit 14b. Moreover, the centers of gravity of the movable parts of the movable member 14a and of the counter-weight unit 14b must coincide in each moment.

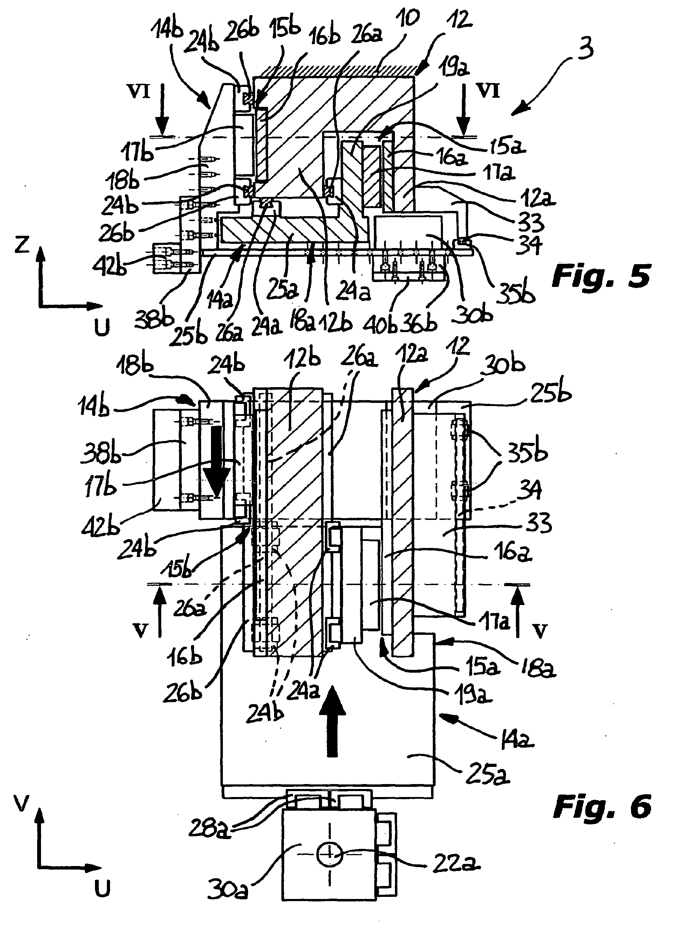

A third embodiment of the working unit of the invention is shown in figures 5 and 6, in which elements equal or similar to those of the previous embodiments have been indicated with the same references.

The working unit of this embodiment, indicated 3, substantially consists of a practical constructive realization of the schematic structure of the previous embodiment.

In this embodiment, the base structure 12, which is fixed to the frame 10, is channel-shaped and has an overturned U section defined by two paralel limbs 12a and 12b delimitating an elongated cavity. The stator 16a of the first actuator means 15a is mounted on the inner face of the limb 12a, while the stator 16b of the second actuator means 15b is mounted on an outside face of the other limb 12b.

The slider 17a of the first actuator means 15a, to which the sliding element 18a is connected, is arranged in a position facing the stator 16a, in order to be movable in the direction of axis V. The element 18a consists of a plate comprising a transversal ribbing 19a extending in the direction of an axis Z orthogonal to axis V, so that at least a substantial portion of the sliding element 18a has a L-shaped cross-section in order to contribute to make its structure very rigid, the slider 17a being fixed to the ribbing 19a. In order to allow the sliding element to slide with respect to the base structure 12, it comprises two pairs of shoes 24a respectively engaging two sliding guides 26a arranged orthogonally to each other, both fixed to the limb 12b of the base structure 12.

A platform 30a for supporting the tool 22a is connected to an end of the sliding element 18a by clamps 28a.

The slider 17b of the second actuator means 15b, which is also movable in the direction of axis V and to which the sliding element 18b is connected, which consists of a plate extending in the direction Z, is arranged in a position facing the stator 16b. The element 18b supports at the bottom the arm 25b having the shape of an elongated rigid plate, to whose end opposite to the element 18b the counter-weight element 30b is fixed, which consists, for example, of a metal body of high specific weight, having a parallelepipedal shape. The element 18b is slidably mounted with respect to the base structure 12 by means of a pair of parallel sliding guides 26b fixed to the limb 12b at opposite sides with respect to the stator 16b, which are engaged by respective pairs of shoes 24b fixed to the element 18b. In some applications, even if it is usually not necessary, may be convenient to guide the end of the arm 25b opposite to the element 18b by means of a sliding guide 34 supported by a support element 33 fixed cantilever to the limb 12a of the base structure 12, the guide 34 being engaged by a pair of shoes 35b connected to the arm 25b, in order to avoid possible torsional and flexural vibrations of the arm 25b.

The definition of the masses of the movable components of the balancing unit 14b and of their position with respect to the working unit, in particular the definition of the mass of the counter-weight element 30b and its position with respect to the arm 25b, are defined during the design. However, their accurate adjustment must be carried out during the assembly of the working unit 3, in order to accomplish the coincidence of the centers of gravity of the movable masses of the movable member 14a and of the balancing unit 14b and of the respective moments, which constitute the more critical conditions for obtaining the dynamic balancing of the system.

In order to facilitate the phases of setup and accurate adjusting of the position of the counter-weight element 30a, first and second auxiliary counter-weights, indicated 36b and 38b, are provided, which are associated to the arm 25a in a position adjacent to the counter-weight element 30b, and to the sliding element 18b in a position adjacent to the arm 25b, respectively. The counter-weights 36b, 38b can be connected to the respective elements by using screws which engages respective threaded holes or by other known fastening systems allowing the possibility of a continuous change of their position. In particular, the auxiliary counter-weight 36b can be moved in one of a series of positions along the direction of axis U, perpendicular to axes V and Z, while the auxiliary counter-weight 38b can be moved in one of a series of positions along the direction of axis Z, in such a manner that a precise compensation of the components of forces and moments along such axes is allowed.

Moreover, in order to attain an accurate adjustment of the position and of the mass of the auxiliary counter-weights 36b and 38b, respective additional masses 40b and 42b can be used, with the function of "trimmer", particularly in the case of prototypes and setup preproductions.

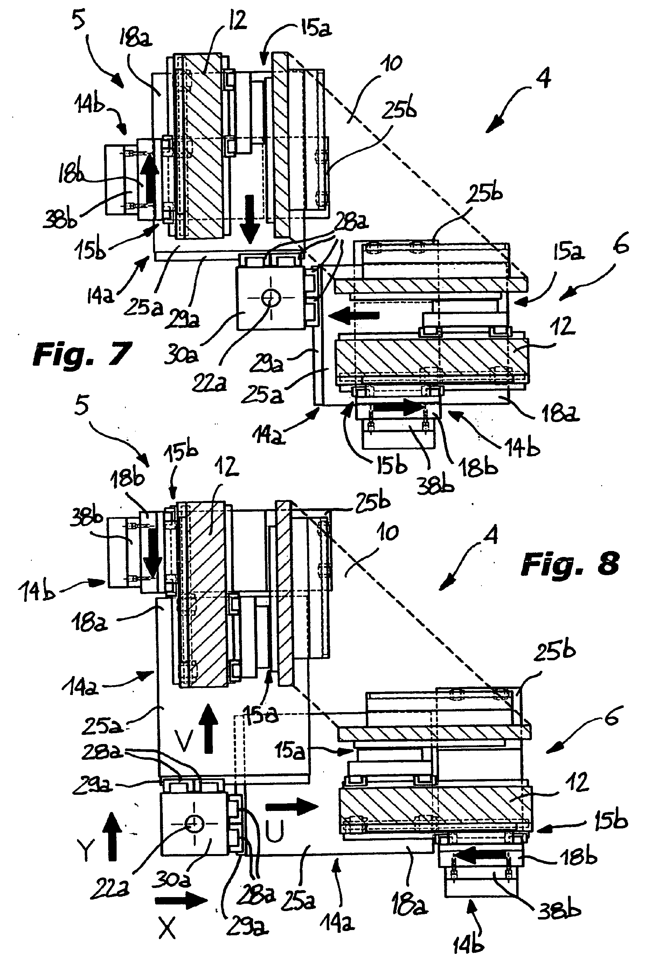

A fourth embodiment of the working unit of the invention is shown in figures 7 and 8, in which elements equal or similar to those of the previous embodiments have been indicated with the same references.

The working unit of this embodiment is indicated 4, and is intended to allow the movement of a support platform 30a for supporting the tool 22a in any position on a plane defined by axes X and Y of figure 8. The movements of the platform 30a are obtained as a result of the movement of a pair of movement units indicated 5 and 6, along respective axis V and U, each movement unit being quite similar to the balanced unit 3 of figures 5 and 6, the unit 5 and 6 being individually balanced and being arranged in a specular manner to each other, so that the working unit 4 is overall dynamically balanced. The structure of the working unit 4 is substantially analogous to that of the known working unit 100 of figure 1, with the substantial difference that the unit 4 is perfectly dynamically balanced.

Each of the sliding elements 18a of the movable members 14a of each movement unit 5 and 6, have a guide 29a which extends transversely to the respective sliding directions V and U, which guides 29a are slidably engaged by two respective pairs of shoes 28a fixed on orthogonal sides of the platform 30a, in such a manner that the platform 30a slides along the guides 29a as a result of the movement of the units 5 and 6 along the respective directions V and U, in order to allow the tool 22a to reach all possible positions within a narrow working area of the plane U-V.

The configurations shown in figures 7 and 8 correspond to two extreme working positions of the working unit 4, in which the sliding elements 18a of the two movement units 5 and 6, which are arranged on different levels in order to avoid interferences during their movement, are both completely retracted, the platform 30a being in its position more close to the two base structures 12 of the units 5 and 6, and both completely extended, the platform 30a being in its position more spaced from the two base structures 12. Of course, the platform 30a together with the respective tool 22a can be carried in whichever position of the plane U-V, as a result of the movements of the units 5 and 6, which are independent to each other.

The working unit 4, in addition to be completely free from any oscillation and vibration during its operation, is also extremely compact, and has the advantage to require only two identical motors for each axis of movement, while other conventional balancing solutions would require three or four motors for each axis and a more heavy and bulky structure.

Since the two units 5 and 6 are arranged in a specular manner, differently from the arrangement of the known unit of figure 1 in which the two branches have an identical configuration, the advantage is attained to avoid any possible interference between the sliding elements 18b during their movement, and to make the counter-weights 36b and 38b more easily accessible during the adjustment of their positions.

When the tool 22a has to be moved by means of the working unit 4 in the direction of axis Z perpendicular to the plane U-V, of course also the movable masses can be balanced along axis Z in a manner quite analogous to what has been described above with reference to the units 5 and 6. However, in general, even if the unit 4 is adapted to move the tool 22a along axis Z, the masses movable along this axis are considerably smaller than those of the units 5 and 6, so that possible vibrations deriving from the movements along axis Z are usually negligible. In substance, in the most practical cases, the dynamic balancing of the unit 4 with respect to axis Z is not necessary.

The working units according to the invention can be applyed to several types of machine tools of generally known structure, with the aim of achieving a relative movement between such working units and a workpiece associated to the machine tool, which has to be undergone to whichever working operation without vibrations.

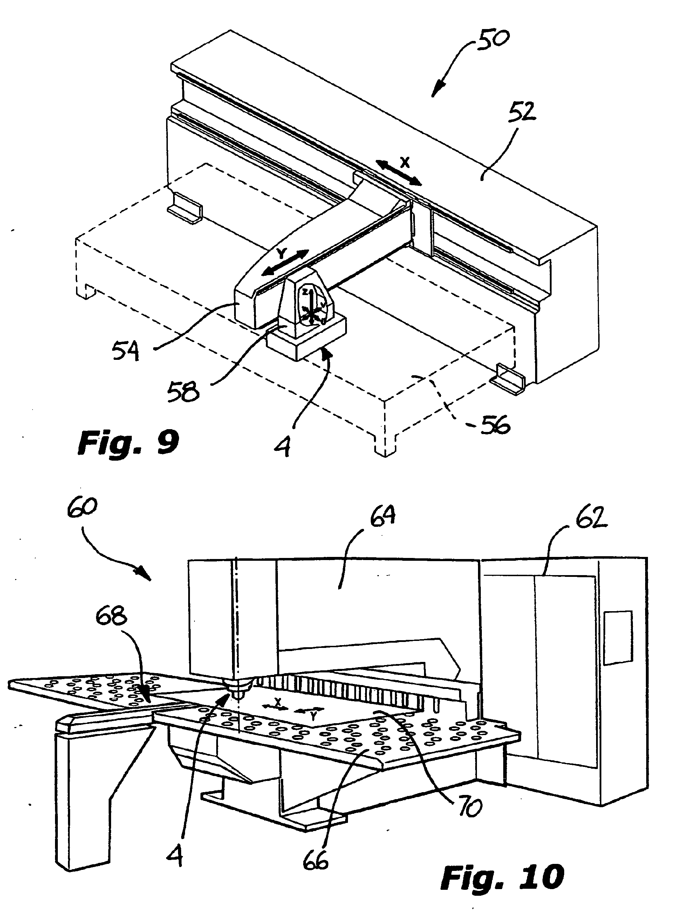

In figure 9 a machine tool 50 is shown which comprises a base 52 having an arm 54 which extends cantilever from the base 52 and is movably mounted in a direction X. Below the arm 54 is arranged a table, or stationary working bed, 56 for supporting or fastening the workpiece (not illustrated). A member 58 supporting a working unit according to the invention, indicated 4, provided with a working tool usually movable along axes U, V and Z by means of the unit 4, is slidably mounted along a direction Y, transversal to the direction X, along the arm 54. This structure has the advantage to make the working unit 4 easily accessible from all sides. The movements of the member 58 and therefore of the whole unit 4 along axes X and Y are carried out with relatively high speeds but with relatively small accelerations in the whole working plane defined by the table 56, while the movements of the tool supported by the unit 4 are carried out with high accelerations in a narrow area corresponding to the positions which can be reached by the tool as a result of the movements of the movable parts of the unit 4, in the plane U-V or in planes parallel thereto.

In figure 10, another machine tool 60 is shown, whose base 62 supports a stationary arm 64 which extends cantilever from the base 62 and supports a working unit 4 which is movable along directions U, V, and possibly Z, perpendicular to each other. In this case, the arm 64 can be manufactured by means of a particularly light structure and therefore not much subject to vibrations. A table, or working bed, 66 provided with anti-friction means, such as balls, is arranged below the arm 64, to which handling means 68 are associated, of a type known per se, which are adapted to drive into motion a workpiece 70 to be subject to a working operation by means of the tool of the unit 4, for example along perpendicular axes X and Y. In particular, the movements of the workpiece 70 are carried out with relatively high speeds but with relatively small accelerations so as to cover the whole wide working area corresponding to the surface of the workpiece 70, while the movements of the tool of the unit 4 are carried out with high accelerations in the respective narrow area.

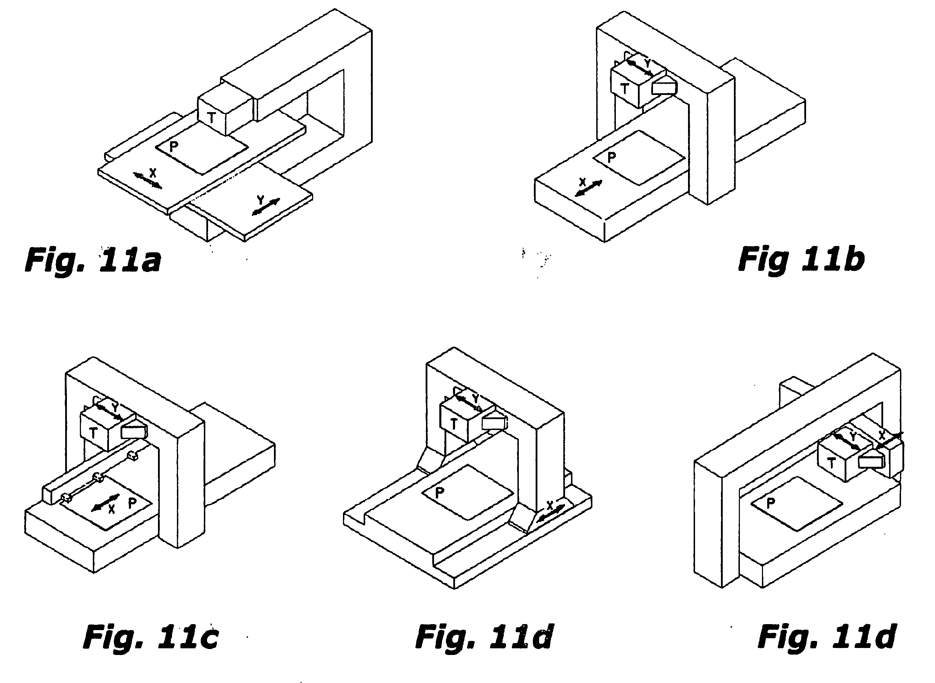

Other possible configurations of machines tools having a generally known structure, which are adapted to be equipped by a working unit according to the invention, are schematically shown in figures 11a to 11d. In short, figure 11a shows a machine conceptually similar to that of figure 10, in which the workpiece P is arranged below a stationary working unit T and is moved by means of a pair of tables which are respectively slidable in the directions X and Y; figure 11b shows a machine comprising a stationary gate structure along which the working unit T is slidably mounted in a direction Y while the workpiece P is supported by a table slidable in the direction X; figure 11c shows a machine provided with a stationary gate structure along which the working unit T is slidably mounted in the direction Y and the workpiece P is slidable on a stationary table along which it is moved in the direction X by linear moving means; figure 11d shows a machine having a gate structure movable along an axis X with respect to a table on which the workpiece P is arranged, the working unit T being slidably mounted with respect to the gate structure in the direction Y; and figure 11e shows a machine provided with a stationary gate structure below which the workpiece P is supported on a stationary table, the working unit T being slidably mounted with respect to the gate structure both in the direction X and in the direction Y.

Of course, other applications are possible in which the working unit of the invention as defined by the appended claims can be used independently, that is without any need to be associated to other handling units in the context of a machine tool.

## Claims

1. Working unit, particularly for a machine tool, comprising a frame (10) and at least a member (14a) movable according to at least a direction of linear movement (U, V, Z) with respect to the frame (10) as a result of driving first actuator means (15a), said movable member (14a) being intended to be moved along the respective path with relatively high accelerations in consequence of which, as a reaction, forces and/or moments are applied to the frame (10) such as to cause oscillations and vibrations of the frame (10) which may affect the precision of working operations carried out by means of the working unit (1; 2; 3; 4), the first actuator means (15a) being controlled by a control signal (S), the unit including balancing means for balancing the movable member (14a), which comprise, for each direction of movement (U, V, Z) to be balanced of said movable member (14a), at least a counter-weight unit (14b) movable with respect to the frame (10) along a respective path and second actuator means (15b) associated with the frame (10) and driven in a manner mechanically independent from the first actuator means (15a), for moving said counter-weight unit (14b) simultaneously with the movable member (14a) and along a direction opposite to the direction of movement of the movable member (14a),
**characterised in that** the mass of said counter-weight unit (14b) is equal to the mass of the respective movable member (14a), and **in that** the counter-weight unit (14b) is so positioned with respect to the movable member (14a) as to compensate for the effects of both the forces and the moments of said reaction with respect to said direction of movement (U, V, Z) independently from other possible directions of movement, the second actuator means (15b) being driven by the same control signal (S) which controls the movement of the first actuator means (15a) in such a manner that the movements of the movable member (14a) and of the counter-weight unit (14b) have, in each moment, substantially the same acceleration and consequently the same speed and the same position, each along the respective path, whereby the movable member (14a) is dynamically balanced in each moment by the counter-weight unit (14b).

2. Working unit according to claim 1**, characterized in that** said counter-weight unit (14b) comprises a plurality of independent counter-weight elements associated to respective actuators (15b), the sum of the masses of said counter-weight elements being equal to the mass of the movable element (14a) and having the center of gravity positioned so as to eliminate in each moment the resultant of the forces and of the moments generated by the movements of the movable member (14a) with respect to the frame (10), each actuator of said counter-weight elements being controlled from the same signal (S) which controls the first actuator means (15a) in such a manner that said counter-weight elements move simultaneously with the movable member (14a) and in a direction opposite to the direction of movement of the movable member (14a).

3. Working unit according to claim 1 or 2, **characterized in that** it comprises a base structure (12) fixed to the frame (10), slidably supporting said movable member (14a) along said direction of movement (U, V, Z), a working head (30a) provided with a working tool (22a) being associated to the movable member (14a), said first actuator means (15a) being interposed between said movable member (14a) and the base structure (12), and **in that** said counter-weight unit (14b) is also slidably supported by the base structure (12) along the direction of movement (U, V, Z) of the movable member (14a), the second actuator means (15b) being interposed between the counter-weight unit (14b) and the base structure (12).

4. Working unit according to claim 3, **characterized in that** said first and second actuator means (15a, 15b) comprise respective preferably identical numerically controlled linear motors, simultaneously controlled from a same signal (S).

5. Working unit according to claim 4, **characterized in that** the movable member (14a) has a portion (25a) essentially transversal to the own direction of movement (U, V, Z) and that said counter-weight unit (14b) comprises therefore an arm (25b) which extends in a direction substantially transversal to the direction of movement (U, V, Z) of said movable member (14a), to which a balancing mass (30b) is connected which is arranged sideways at the movable member (14a) on the same side of the first actuator means (15a) with respect to the base structure (12).

6. Working unit according to claim 1 or 2, **characterized in that** it comprises a first and a second base structure (12) fixed to frame (10), the first base structure supporting a first movable member (14a) slidable along a first direction of movement (V) and the second base structure supporting a second movable member (14a) slidable along a second direction of movement (U) orthogonal to the first direction of movement (V), and a working head (30a) provided with a working tool (22a) being slidably associated to both the movable members (14a), wherein between the first base structure (12) and the first movable member (14a) and between the second base structure (12) and the second movable member (14a), respectively, first actuator means (15a) are interposed for moving said movable members (14a) with respect to the the frame (10) independently to each other and in a synchronized manner as a function of the working operation to be carried out, and **in that** the first base structure (12) slidably supports along said first direction of movement (V) a first counter-weight unit (14b), and the second base structure (12) slidably supports along said second direction of movement (U) a second counter-weight unit (14b), second actuator means (15b) adapted to move said counter-weight unit (14b) independently to each other with respect to the respective base structures (12), being interposed between the first base structure (12) and the first counter-weight unit (14b) and between the second base structure (12) and the second counter-weight unit (14b), respectively.

7. Working unit according to claim 6, **characterized in that** the first actuator means (15a) of said first and second movable member (14a) and the second actuator means (15b) of said first and second counter-weight unit (14b), comprise preferably identical respective numerically controlled linear motors.

8. Working unit according to claim 7, **characterized in that** each movable member (14a) has a portion (25a) transversal to the own direction of movement (U, V, Z) and that therefore each counter-weight unit (14b) comprises an arm (25b) which extends in a direction substantially transversal to the direction of movement (U, V, Z) of the respective movable member (14a), to which a balancing mass (30a) is connected so as to be positioned sideways at the respective movable member (14a), in a position substantially adjacent to the first actuator means (15a) of the respective movable member (14a).

9. Working unit according to claim 5 or 8, **characterized in that** a first auxiliary counter-weight (36b) and a second auxiliary counter-weight (38b) are associated to the arm (25b) of each counter-weight unit (14b) with possibility of adjustment of their position, whose positions can be changed with respect to the respective counter-weight unit (14b) along respectivly perpendicular directions (U, Z).

10. Working unit according to claim 9, **characterized in that** a respective additional balancing mass (40b, 42b) adapted to be arranged according a plurality of adjustable positions, can be associated to each auxiliary counter-weight (36b, 38b), in order to allow an accurate adjustment of the position of said auxiliary counterweights (36b, 38b).

11. Machine tool comprising a working unit according to any one of claims 1 to 10, wherein the working unit (1; 2; 3; 4) is slidably mounted according to a direction of movement (Y) along an elongated structure (54) which extends from a base (52) of the machine tool (50) so as to be superimposed to a table (56) for supporting a workpiece to be worked, the elongated structure (54) being in its turn slidably mounted with respect to the base (52) along a direction (X) perpendicular to the direction of movement (Y) of the working unit (4) along the elongated structure (54).

12. Machine tool comprising a working unit according to any one of claims 1 to 10, wherein the working unit is mounted on a superimposed portion (64) of the machine tool (60), fixed to a base (62) of the machine tool (60), wherein the machine tool (60) comprises, below said superimposed portion (64), automatic means (68) for moving a workpiece (70) to be subject to a working operation by means of the working unit (4), along at least one direction (X, Y).

## Patentansprüche

1. Bearbeitungseinheit, insbesondere für eine Werkzeugmaschine, umfassend einen Rahmen (10) und wenigstens ein Bauteil (14a), das durch ein erstes Antriebsorgan (15a) in wenigstens einer Richtung einer Linearbewegung (U, V, Z) bezüglich des Rahmens (10) verschiebbar ist, wobei dieses bewegliche Bauteil (14a) auf einer zugeordneten Bahn mit verhältnismäßig hohen Beschleunigungen verschiebbar ist, so dass als Reaktion Kräfte und/oder Momente auf den Rahmen (10) ausgeübt werden, die auf den Rahmen (10) Schwingungen und Vibrationen ausüben, welche die Bearbeitungsgenauigkeit der Bearbeitungseinheit (1; 2; 3; 4) beeinträchtigen können, wobei das erste Antriebsorgan (15a) durch ein Steuersignal (S) gesteuert wird und die Einheit Ausgleichsmittel für das bewegliche Bauteil (14a) aufweist, die für jede auszugleichende Bewegungsrichtung (U, V, Z) des Bauteils (14a) wenigstens eine Gegengewichtseinheit (14b), die relativ zu dem Rahmen (10) auf einer entsprechenden Bahn beweglich ist, sowie ein zweites Antriebsorgan (15b) aufweist, das mit dem Rahmen (10) verbunden ist und mechanisch unabhängig von dem ersten Antriebsorgan (15a) angetrieben wird, um die Gegengewichtseinheit (14b) simultan mit dem Bauteil (14a) in einer Richtung entgegengesetzt zur Verschieberichtung des Bauteils (14a) zu bewegen, **dadurch gekennzeichnet, dass** die Masse der Gegengewichtseinheit (14b) gleich der Masse des entsprechenden beweglichen Bauteils (14a) ist und dass die Gegengewichtseinheit (14b) bezüglich des beweglichen Bauteils (14a) so angeordnet ist, dass die Wirkungen sowohl der Kräfte als auch der Momente der genannten Reaktion bezüglich dieser Bewegungsrichtung (U, V, Z) unabhängig von anderen möglichen Bewegungsrichtungen kompensiert werden, wobei das zweite Antriebsorgan (15b) durch dasselbe Steuersignal (S) gesteuert wird, das auch die Bewegung des ersten Antriebsorgans (15a) steuert derart, dass das bewegliche Bauteil (14a) und die Gegengewichtseinheit (14b) jeweils auf ihrer Bahn zu jeden Zeitpunkt im wesentlichen dieselbe Beschleunigung und damit auch dieselbe Geschwindigkeit und dieselbe Position haben, wodurch das bewegliche Bauteil (14a) zu jedem Zeitpunkt durch die Gegengewichtseinheit (14b) dynamisch ausgeglichen ist.

2. Bearbeitungseinheit nach Anspruch 1, **dadurch gekennzeichnet, dass** die Gegengewichtseinheit (14b) eine Mehrzahl unabhängiger Gegengewichtselemente hat, die entsprechenden Antriebsorganen (15b) zugeordnet sind, wobei die Summe der Massen der Gegengewichtselemente gleich der Masse des beweglichen Bauteils (14a) ist und ihr Schwerpunkt so positioniert ist, dass zu jedem Zeitpunkt die Resultierende der Kräfte und der Momente, die durch die Bewegungen des beweglichen Bauteils (14a) relativ zu dem Rahmen (10) erzeugt werden, eliminiert ist, wobei jedes Antriebsorgan der Gegengewichtselemente durch dasselbe Signal (S) gesteuert wird, das auch das erste Antriebsorgan (15a) so steuert, dass sich die Gegengewichtselemente simultan mit dem beweglichen Bauteil (14a) und in einer Richtung entgegengesetzt zur Bewegungsrichtung des beweglichen Bauteils (14a) bewegen.

3. Bearbeitungseinheit nach Anspruch 1 oder 2, **dadurch gekennzeichnet, dass** dieses ein am Rahmen (10) befestigtes Grundgestell (12) aufweist, welches das bewegliche Bauteil (14a) in der Bewegungsrichtung (U, V, Z) verschiebbar trägt, wobei dem beweglichen Bauteil (14a) ein Bearbeitungskopf (30a) mit einem Bearbeitungswerkzeug (22a) zugeordnet ist und das Antriebsorgan (15a) zwischen dem beweglichen Bauteil (14a) und dem Grundgestell (12) eingesetzt ist, und dass die Gegengewichtseinheit (14b) in der Bewegungsrichtung (U, V, Z) des beweglichen Bauteils (14a) ebenfalls verschiebbar an dem Grundgestell (12) gelagert ist, wobei das zweite Antriebsorgan (15b) zwischen die Gegengewichtseinheit (14b) und das Grundgestell (12) eingesetzt ist.

4. Bearbeitungseinheit nach Anspruch 3, **dadurch gekennzeichnet, dass** das erste und das zweite Antriebsorgan (15a, 15b) jeweils vorzugsweise identische, numerisch gesteuerte Linearmotoren aufweisen, die simultan durch dasselbe Signal (S) gesteuert werden.

5. Bearbeitungseinheit nach Anspruch 4, **dadurch gekennzeichnet, dass** das bewegliche Bauteil (14a) einen im wesentlichen quer zur eigenen Bewegungsrichtung (U, V, Z) verlaufenden Abschnitt (25a) aufweist und die Gegengewichtseinheit (14b) dadurch einen Arm (25b) hat, der sich im wesentlichen quer zur Bewegungsrichtung (U, V, Z) des beweglichen Bauteils (14a) erstreckt, mit dem eine Ausgleichsmasse (30a) verbunden ist, die sich seitlich von dem beweglichen Bauteil (14a) bezüglich des Grundgestells (12) zur selben Seite wie das erste Antriebsorgan (15a) erstreckt.

6. Bearbeitungseinheit nach Anspruch 1 oder 2, **dadurch gekennzeichnet, dass** diese ein erstes und ein zweites Grundgestell (12) aufweist, die mit dem Rahmen (10) verbunden sind, wobei das erste Grundgestell ein erstes bewegliches Bauteil (14a) trägt, das in einer ersten Bewegungsrichtung (V) verschiebbar ist, während das zweite Grundgestell ein zweites bewegliches Bauteil (14a) hat, das in einer zweiten Bewegungsrichtung (U) rechtwinklig zur ersten Bewegungsrichtung (V) verschiebbar ist, wobei beiden beweglichen Bauteilen (14a) ein Bearbeitungskopf (30a) mit einem Bearbeitungswerkzeug (22a) verschiebbar zugeordnet ist, wobei ferner zwischen dem ersten Grundgestell (12) und dem ersten beweglichen Bauteil (14a) und zwischen dem zweiten Grundgestell (12) und dem zweiten beweglichen Bauteil (14a) jeweils erste Antriebsorgane (15a) eingesetzt sind, um die beweglichen Bauteile (14a) relativ zu dem Rahmen (10) unabhängig voneinander und in Funktion der durchzuführenden Bearbeitungsoperation synchron zu bewegen, und dass das erste Grundgestell (12) eine in der ersten Bewegungsrichtung (V) verschiebbare erste Gegengewichtseinheit (14b) trägt, während das zweite Grundgestell (12) eine in der zweiten Bewegungsrichtung (U) verschiebbare zweite Gegengewichtseinheit (14b) trägt, wobei zweite Antriebsorgane (15b), die die Gegengewichtseinheit (14b) unabhängig voneinander relativ zu den zugeordneten Grundgestellen (12) bewegen, zwischen das erste Grundgestell (12) und die erste Gegengewichtseinheit (14b) beziehungsweise zwischen das zweite Grundgestell (12) und die zweite Gegengewichtseinheit (14b) eingesetzt sind.

7. Bearbeitungseinheit nach Anspruch 6, **dadurch gekennzeichnet, dass** das erste Antriebsorgan (15a) des ersten und des zweiten beweglichen Bauteils (14a) und das zweite Antriebsorgan (15a) der ersten und der zweiten Gegengewichtseinheit (14b) entsprechende, vorzugsweise identische numerisch gesteuerte Linearmotoren aufweisen.

8. Bearbeitungseinheit nach Anspruch 7, **dadurch gekennzeichnet, dass** jedes Bauteil (14a) einen quer zur eigenen Bewegungsrichtung (U, V, Z) verlaufenden Abschnitt (25a) hat und dass damit jede Gegengewichtseinheit (14b) einen Arm (25b) aufweist, der sich im wesentlichen quer zur Bewegungsrichtung (U, V, Z) des entsprechenden beweglichen Bauteils (14a) erstreckt, mit dem eine Ausgleichsmasse (30a) verbunden ist derart, dass sich diese seitlich von dem beweglichen Bauteil (14a) in eine Position erstreckt, die im wesentlichen neben dem ersten Antriebsorgan (15a) des entsprechenden Bauteils (14a) liegt.

9. Bearbeitungseinheit nach Anspruch 5 oder 8, **dadurch gekennzeichnet, dass** ein erstes Hilfsgegengewicht (36b) und ein zweites Hilfsgegengewicht (38b) dem Arm (25b) jeder Gegengewichtseinheit (14b) mit der Möglichkeit der Einstellung ihrer Position zugeordnet sind, deren Positionen bezüglich der entsprechenden Gegengewichtseinheit (14b) im zueinander rechtwinkligen Richtungen (U, Z) veränderbar sind.

10. Bearbeitungseinheit nach Anspruch 9, **dadurch gekennzeichnet, dass** eine entsprechende zusätzliche Ausgleichsmasse (40b, 42b), die in einer Vielzahl einstellbarer Positionen angeordnet werden kann, jedem Hilfsgegengewicht (36b, 38b) zugeordnet werden kann, um eine exakte Einstellung der Position der Hilfsgegengewichte (36b, 38b) zu gewährleisten.

11. Werkzeugmaschine mit einer Bearbeitungseinheit nach einem der Ansprüche 1 bis 10, **dadurch gekennzeichnet, dass** die Bearbeitungseinheit (1; 2; 3; 4) in einer Bewegungsrichtung (Y) auf einem Längsgestell (54) verschiebbar gelagert ist, welches sich von einem Grundgestell (52) der Werkzeugmaschine (50) so erstreckt, dass es über einem Tisch (56) für die Aufnahme eines zu bearbeitenden Werkstücks liegt, wobei das Längsgestell (54) seinerseits relativ zu dem Grundgestell (52) in einer Richtung (X) verschiebbar gelagert ist, die rechtwinklig zur Bewegungsrichtung (Y) der Bearbeitungseinheit (4) auf dem Längsgestell (54) verläuft.

12. Werkzeugmaschine mit einer Bearbeitungseinheit nach einem der Ansprüche 1 bis 10, **dadurch gekennzeichnet, dass** die Bearbeitungseinheit an einem über der Werkzeugmaschine (60) liegenden Abschnitt (64) gelagert ist, der an einem Grundgestell (62) der Werkzeugmaschine (60) befestigt ist, wobei diese Werkzeugmaschine (60) unter dem oberen Abschnitt (64) automatische Mittel (68) hat, um das von der Bearbeitungseinheit (4) zu bearbeitende Werkstück (70) in wenigstens einer Richtung (X, Y) zu bewegen.

## Revendications

1. Unité de travail, en particulier pour une machine-outil, comprenant un bâti (10) et au moins un organe (14a) mobile selon au moins une direction de mouvement linéaire (U, V, Z), par rapport au bâti (10), en raison de son entraînement par des premiers moyens d'actionnement (15a), ledit organe mobile (14a) étant destiné à être déplacé selon la direction respective et à être soumis à des accélérations relativement élevées en conséquence desquelles, en tant qu'efforts de réaction, des forces et/ou des moments sont exercés sur le bâti (10) provoquant de ce fait des oscillations et des vibrations du bâti (10) qui peuvent affecter la précision des opérations de traitement réalisées au moyen de l'unité de travail (1 ; 2 ; 3 ; 4), les premiers moyens d'actionnement (15a) étant commandés par l'intermédiaire d'un signal de commande (S) ; l'unité comprenant des moyens d'équilibrage propres à équilibrer l'organe mobile (14a), ces moyens comprenant pour chacune des directions de mouvement (U, V, Z) dudit organe mobile (14a) devant être équilibré, au moins une unité de contrepoids (14b) mobile par rapport au bâti (10) selon une direction respective et des deuxièmes moyens d'actionnement (15b), associés au bâti (10), et étant entraînés de manière mécaniquement indépendante par des premiers moyens d'actionnement (15a), afin de déplacer ladite unité de contrepoids (14b) de manière simultanée avec l'organe mobile (14a) et selon une direction opposée à la direction de déplacement de l'organe mobile (14a),
**caractérisée en ce que** la masse de ladite unité de contrepoids (14b) est égale à la masse de l'organe mobile respectif (14a), et **en ce que** l'unité de contrepoids (14b) est positionnée par rapport à l'organe mobile (14a) de manière à compenser à la fois les effets des forces et des moments de ladite réaction par rapport à ladite direction de mouvement (U, V, Z), indépendamment de toutes autres directions de mouvement possibles, les deuxièmes moyens d'actionnement (15b) étant entraînés par le même signal de commande (S) qui commande le mouvement des premiers moyens d'actionnement (15a) de telle manière que les mouvements de l'organe mobile (14a) et de l'unité de contrepoids (14b) ont, à chaque instant, substantiellement la même accélération et par conséquent la même vitesse et le même positionnement, chacun selon une direction respective, de telle sorte que l'organe mobile (14a) soit à chaque instant, équilibré de manière dynamique par l'unité de contrepoids (14b).

2. Unité de travail selon la revendication 1, **caractérisée en ce que** ladite unité de contrepoids (14b) comprend une pluralité d'éléments de contrepoids indépendants associés aux actionneurs respectifs (15b), la somme des masses desdits éléments de contrepoids étant égale à la masse de l'organe mobile (14a) et ayant un centre de gravité positionné de manière à éliminer, à chaque instant, la résultante des forces et des moments générés par les mouvements de l'organe mobile (14a) par rapport au bâti (10), chacun des actionneurs desdits éléments de contrepoids étant commandé par le même signal (S) qui commande les premiers moyens d'actionnement (15a) de telle manière que lesdits éléments de contrepoids se déplacent de manière simultanée avec l'organe mobile (14a) et selon une direction opposée à la direction du mouvement de l'organe mobile (14a).

3. Unité de travail selon la revendication 1 ou la revendication 2, **caractérisée en ce qu'**elle comprend une structure formant base (12) reliée au bâti (10), supportant de manière coulissante ledit organe mobile (14a) selon ladite direction de mouvement (U, V, Z) ; une tête de travail (30a) équipée d'un outil de travail (22a) étant associé à l'organe mobile (14a), lesdits premiers moyens d'actionnement (15a) étant agencés de manière intercalaire entre ledit organe mobile (14a) et la structure formant base (12) ; et **en ce que** ladite unité de contrepoids (14b) est également supportée de manière coulissante par la structure formant base (12) selon la direction de mouvement (U, V, Z) de l'organe mobile (14a), les deuxièmes moyens d'actionnement (15b) étant agencés de manière intercalaire entre l'unité de contrepoids (14b) et la structure formant base (12).

4. Unité de travail selon la revendication 3, **caractérisée en ce que** lesdits premiers et deuxièmes moyens d'actionnement (15a, 15b) comprennent des moteurs linéaires respectifs, de préférence identiques, commandés de manière numérique, et commandés simultanément à partir du même signal (S).

5. Unité de travail selon la revendication 4, **caractérisée en ce que** l'organe mobile (14a) comprend une partie (25a) substantiellement transverse à la direction de mouvement (U, V, Z) qui lui est propre ; et **en ce que** ladite unité de contrepoids (14b) comprend par conséquent un bras (25b) qui se prolonge dans une direction substantiellement transverse à la direction de mouvement (U, V, Z) dudit organe mobile (14a), auquel bras est reliée une masse d'équilibrage (30b), qui est agencée latéralement à l'organe mobile (14a) du même côté que les premiers moyens d'actionnement (15a) par rapport à la structure formant base (12).

6. Unité de travail selon la revendication 1 ou la revendication 2, **caractérisée en ce qu'**elle comprend une première et une deuxième structure formant base (12) reliées au bâti (10), la première structure formant base supportant un premier organe mobile (14a) apte à coulisser selon une première direction de mouvement (V) et la deuxième structure formant base supportant un deuxième organe mobile (14a) apte à coulisser selon une deuxième direction de mouvement (U) orthogonale à la première direction de mouvement (V), et une tête de travail (30a) équipée d'un outil de travail (22a) étant associé de manière coulissante aux deux organes mobiles (14a), unité de travail dans laquelle, entre la première structure formant base (12) et le premier organe mobile (14a) et entre la deuxième structure formant base (12) et le deuxième organe mobile (14a), respectivement, des premiers moyens d'actionnement (15a) sont agencés de manière intercalaire afin de déplacer lesdits organes mobiles (14a) par rapport au bâti (10) indépendamment l'un de l'autre et de manière synchronisée en fonction de l'opération de traitement destinée à être réalisée, et **en ce que** la première structure formant base (12) soutien, de manière coulissante selon ladite première direction de mouvement (V), une première unité de contrepoids (14b), et la deuxième structure formant base (12) soutien, de manière coulissante selon ladite deuxième direction de mouvement (U), une deuxième unité de contrepoids (14b), des deuxièmes moyens d'actionnement (15b) adaptés pour déplacer ladite unité de contrepoids (14b) de manière indépendante l'un de l'autre par rapport aux structures de base respectives (12), étant agencés de manière intercalaire entre la première structure formant base (12) et la première unité de contrepoids (14b) et entre la deuxième structure formant base (12) et la deuxième unité de contrepoids (14b), respectivement.

7. Unité de travail selon la revendication 6, **caractérisée en ce que** les premiers moyens d'actionnement (15a) desdits premier et deuxième éléments mobiles (14a) et les deuxièmes moyens d'actionnement (15b) desdites première et deuxième unités de contrepoids (14b), comprennent des moteurs linéaires respectifs, de préférence identiques, commandés de manière numérique.

8. Unité de travail selon la revendication 7, **caractérisée en ce que** chaque organe mobile (14a) comprend une partie (25a) transverse à la direction de mouvement (U, V, Z) qui lui est propre ; et **en ce que**, par conséquent, chaque unité de contrepoids (14b) comprend un bras (25b) qui se prolonge selon une direction substantiellement transversale à la direction de mouvement (U, V, Z) dudit organe mobile respectif (14a), auquel bras est reliée une masse d'équilibrage (30b) de manière à être positionnée latéralement à l'organe mobile respectif (14a), selon une position substantiellement adjacente aux premiers moyens d'actionnement (15a) de l'organe mobile (14a) respectif.

9. Unité de travail selon la revendication 5 ou la revendication 8, **caractérisée en ce qu'**un premier contrepoids auxiliaire (36b) et un deuxième contrepoids auxiliaire (38b) sont associés au bras (25b) de chacune des unités de contrepoids (14b), avec possibilité d'ajustement de leur position, lesquelles positions peuvent être modifiées par rapport à l'unité de contrepoids respective (14b) selon des directions perpendiculaires (U, Z) respectives.

10. Unité de travail selon la revendication 9, **caractérisée en ce qu'**une masse d'équilibrage additionnelle respective (40b, 42b) adaptée pour être agencée selon une pluralité de positions ajustables peut être associée à chacun des contrepoids auxiliaires (36b, 38b), afin de permettre un ajustement approprié de la position desdits contrepoids auxiliaires (36b, 38b).

11. Machine-outil comprenant une unité de travail selon l'une quelconque des revendications 1 à 10, dans laquelle l'unité de travail (1 ; 2 ; 3 ; 4) est agencée de manière coulissante selon une direction de mouvement (Y) le long d'une structure allongée (54) qui s'étend à partir d'un élément formant base (52) de la machine-outil (50) de manière à venir en superposition sur un plateau (56) pour soutenir une pièce de travail destinée à être travaillée, la structure allongée (54) étant ensuite elle-même agencée de manière coulissante par rapport à l'élément formant base (52) selon une direction (X) perpendiculaire à la direction de mouvement (Y) de l'unité de travail (4) le long de la structure allongée (54).

12. Machine-outil comprenant une unité de travail selon l'une quelconque des revendications 1 à 10, dans laquelle l'unité de travail est agencée sur une partie (64) venant en superposition sur la machine-outil (60) reliée à un support (62) de la machine-outil (60), la machine-outil (60) comprenant, en dessous de ladite partie venant en superposition (64), des moyens automatisés (68) aptes à déplacer une pièce de travail (70) destinées à être soumise à une opération de traitement au moyen de l'unité de travail (4), selon au moins une direction (X, Y).
